# EUROPEAN PATENT APPLICATION

(11) **EP 4 382 889 A1**
(43) Date of publication of application: **12.06.2024**
(21) Application number: 22853239.6
(22) Date of filing: 20.05.2022
(51) Int. Cl.: G01N 21/31, G01N 21/25, G01N 21/35, G01N 21/64, G02B 27/10, G01N 21/17

(54) **THREE-DIMENSIONAL PHOTODETECTION DEVICE**

(30) Priority: 05.08.2021 KR 20210103305
(71) Applicant: Metaplebio Co., Ltd., Seoul 06677 (KR)
(72) Inventor: HAN, Young Geun, Seoul 05834 (KR); PARK, Hong Seong, Seoul 02560 (KR)
(74) Representative: Sander, Rolf
(86) International application number: PCT/KR2022/007228
(87) International publication number: WO 2023/013859

(57) **Abstract**

Proposed is a three-dimensional light detection apparatus. The apparatus is capable of detecting a light signal, resulting from multi-wavelength light, released from a light source and emitted to a sample, reflecting off or radiating from the sample. The apparatus includes an objective lens arranged toward the sample, a band rejection filter eliminating an excited light signal of the light source from the light signal, and an infrared image sensor detecting a fluorescent signal from the light signal propagating through the band rejection filter, wherein the infrared image sensor detects two types of fluorescent signals, resulting from separation caused by a difference in a path for the light signal, in a distinguished manner, and the difference in the path is generated by a time taken for the light signal to reach the infrared image sensor or by a distance over which the light signal propagates to reach the infrared image sensor.

## Description

### [Technical Field]

The present disclosure relates to a three-dimensional light detection apparatus, and more particularly, to a three-dimensional light detection apparatus capable of three-dimensionally detecting and outputting light that is emitted at multi-wavelengths and reflects off or radiates from the sample, in a manner that is distinguished using a plurality of fluorescent signals.

### [Background Art]

In a clinical trial, animal testing, image-guided surgery, and the like, a typical fluorescent imaging system may collect exciting light having one wavelength, may allow the exciting light to pass through, may emit the exciting light to a sample, that is, an observation-target body portion, and may observe a change in the sample or a structure of the sample, which results from a light signal reflected off or radiating (which means emission of a fluorescent signal) from the sample.

This use of the exciting light at a signal wavelength in the fluorescent imaging system makes in the related art it impossible to excite a luminous body using various wavelengths. In addition, it is impossible to vary a wavelength of the exciting light in a light source, thereby making it impossible to simultaneously observe multi-fluorescent images having a multi-spectrum.

Moreover, the multi-fluorescent image cannot be detected or observed by being separated into various fluorescent signals. In addition, the multi-fluorescent image cannot be output. A fluorescent image can be output only in two-dimensionally on the basis of one fluorescent signal. Thus, it is impossible to detect a three-dimensional image. Consequently, a problem arises in that, using only the fluorescent image being output, it is difficult to distinguish a portion where a contrast medium is present and a similar portion that releases a light signal.

Accordingly, in the medical field where more accurate and precise results are required even when using an apparatus capable of detecting and outputting a fluorescent signal, to obtain more accurate results, there is a need for performing a plurality of inspections using a new wavelength each a plurality of contrast mediums is utilized.

In a case where a light source for multi-wavelength light is used in this manner, there occurs a problem in that the accuracy of image reading decreases or additional detection is necessary, thereby increasing the cost and time.

The above-mentioned matter in the background art is technical information that the inventor already retains to contrive the present disclosure, or technical information that is acquired by the inventor when contriving the present disclosure. Therefore, the above-mentioned matter cannot be necessarily regarded as a technology publicly known to the public before the present disclosure is filed with the Korean Intellectual Property Office.

(Patent Document) Korean Patent Application Publication No. 10-2019-0067337 (published on June 17, 2019)

### [Disclosure]

### [Technical Problem]

One object of the present disclosure is to provide a three-dimensional light detection apparatus capable of acquiring fluorescent images having different wavelengths in a manner that distinguishes them on a per-wavelength basis. Particularly, the object of the present disclosure is to provide a three-dimensional light detection apparatus capable of outputting fluorescent signals having different wavelengths in a manner that distinguishes them using different colors.

Another object of the present disclosure is to provide a three-dimensional light detection apparatus capable of separating a path, along which a fluorescent signal or a visible light signal propagates, into left-side and right-side paths using a path separator and thus of three-dimensionally detecting and outputting a fluorescent image and a visible light image.

Still another object of the present disclosure is to provide a three-dimensional light detection apparatus capable of performing separation into a visible light signal and fluorescent signals having different wavelengths, using a wavelength separator and simultaneously outputting the visible light signal and the fluorescent signals.

The present disclosure is not limited to the above-mentioned objects. An object not mentioned would be apparent from the following description to a person of ordinary skill in the art.

### [Technical Solution]

In order to address the above-mentioned problem, according to one aspect of the present disclosure, there is provided a three-dimensional light detection apparatus capable of detecting a light signal, resulting from multi-wavelength light, released from a light source and emitted to a sample, reflecting off or radiating from the sample, the apparatus including: an objective lens arranged toward the sample; a band rejection filter eliminating an excited light signal of the light source from the light signal; an infrared image sensor detecting a fluorescent signal from the light signal propagating through the band rejection filter, wherein the infrared image sensor detects two types of fluorescent signals, resulting from separation caused by a difference in a path for the light signal, in a distinguished manner, and the difference in the path is generated by a time taken for the light signal to reach the infrared image sensor or by a distance over which the light signal propagates to reach the infrared image sensor.

The three-dimensional light detection apparatus may further include a zoom lens arranged between the band rejection filter and the infrared image sensor, wherein the path for the light signal may include a left-side light path; and a right-side light path, and wherein the zoom lens may be arranged on each of the left-side light path and the right-side light path, and the band rejection filter may be arranged on each of the left-side light path and right-side light path.

The three-dimensional light detection apparatus may further include a wavelength separator arranged between the infrared image sensor and the zoom lens; and a visible light image sensor detecting a visible light signal separated from the light signal by the wavelength separator.

In order to address the above-mentioned problem, according to another aspect of the present disclosure, there is provided a three-dimensional light detection apparatus capable of detecting a light signal, resulting from multi-wavelength light, released from a light source and emitted to a sample, reflecting off or radiating from the sample, the apparatus including: a lens unit arranged toward the sample; a band rejection filter arranged between the lens unit and the sample and eliminating an excited light signal of the light source from the light signal; a path separator separating the light signal propagating through the band rejection filter into light signals propagating along two light paths, respectively; and an infrared image sensor detecting a fluorescent signal from each of the light signals, which result from the path separation by the path separator, wherein the fluorescent signals propagate in parallel with each other and reach the infrared image sensor along the two light paths, respectively, a difference in distance on a path being present between the two light paths, and wherein the lens unit includes at least one of objective and zoom lenses.

The three-dimensional light detection apparatus may further include a reflector changing a path for the light signal in such a manner that one of the light signals, which result from the separation by the path separator, propagates toward the infrared image sensor, wherein the path separator may be a beam splitter.

The three-dimensional light detection apparatus may further include: a wavelength separator arranged between the infrared image sensor and the path separator; and a visible light image sensor detecting each of the visible light signals, which result from the separation by the wavelength separator.

In the three-dimensional light detection apparatus, the path separator may be a rotation deflection element, and the infrared image sensor may detect the fluorescent signals, which result from the temporal separation by the rotation reflection into a left-side light path and a right-side light path.

The three-dimensional light detection apparatus may further include: a wavelength separator arranged between the infrared image sensor and the band rejection filter; and a visible light image sensor detecting a visible light signal, resulting from the wavelength separator.

The three-dimensional light detection apparatus may further include a visible light rotation deflection element arranged between the wavelength separator and the visible light image sensor, wherein the infrared image sensor may detect the visible light signals, which result from the temporal separation by the visible light rotation reflection into the left-side light path and the right-side light path.

### [Advantageous Effects]

According to one embodiment of the present disclosure, image images having different wavelengths can be acquired in a manner that distinguishes them on a per-wavelength basis.

According to another embodiment of the present disclosure of the present disclosure, a fluorescent image and a visible light image can be three-dimensionally detected and output.

According to still embodiment of the present disclosure, separation into a visible light signal and fluorescent signals having different wavelengths can be performed, and the visible light signal and the fluorescent signals can be simultaneously output.

The present disclosure is not limited to the above-mentioned effects. Effects not mentioned would be apparent from the following description to a person of ordinary skill in the art to which the present disclosure pertains.

### [Description of Drawings]

FIG. 1 is a schematic block diagram illustrating a multi-wavelength three-dimensional fluorescent imaging system according to a first embodiment of the present disclosure.
FIG. 2 is a schematic block diagram illustrating a three-dimensional light detection apparatus according to the first embodiment of the present disclosure.
FIG. 3 is a schematic block diagram illustrating a three-dimensional light detection apparatus according to a second embodiment of the present disclosure.
FIG. 4 is a schematic block diagram illustrating a three-dimensional light detection apparatus according to a third embodiment of the present disclosure.
FIG. 5 is a schematic block diagram illustrating a three-dimensional light detection apparatus according to a fourth embodiment of the present disclosure.
FIG. 6 is a schematic block diagram illustrating a three-dimensional light detection apparatus according to a fifth embodiment of the present disclosure.
FIG. 7 is a schematic block diagram illustrating a three-dimensional light detection apparatus according to a sixth embodiment of the present disclosure.
FIG. 8 is a schematic block diagram illustrating a three-dimensional light detection apparatus according to a seventh embodiment of the present disclosure.

### [Best Mode]

Advantages and features of the present disclosure, and methods of achieving the advantages and the features will be apparent from embodiments that will be described in detail below with reference to the accompanying drawings. However, the present disclosure is not limited to the embodiments that will be disclosed below and may be implemented in various different forms. The embodiments are only provided to make the present disclosure complete and to provide definite notice as to the scope of the present disclosure to a person of ordinary skill in the art to which the present disclosure pertains. The scope of the present disclosure should be only defined by claims.

Shapes, sizes, scales, angles, quantities, and the like that are illustrated in the drawings for description of the present disclosure are only given as examples and thus do not impose any limitation to the present disclosure. In addition, a specific description of a well-known technology associated with the present disclosure will be omitted when determined as making the nature and gist of the present disclosure obfuscated. The verbs "include," "have," "is configured with", and the like, which are used in the present specification, as long as the modifier "only" is not used, may allow for addition of one or more other components. Unless explicitly stated otherwise, a constituent element expressed in single form may be interpreted as having the same meaning as constituent elements in plural form.

Although explicitly stated otherwise, a range of allowable errors for a constituent element should be considered when interpreting the constituent element.

The ordinal number terms first, second, and so on, although used to describe various constituent elements, do not impose any limitation on these ordinal number terms. These ordinal number terms are used to distinguish one constituent component from one or more other constituent components. Therefore, a first constituent element that will be described below may be named a second constituent element as long as this naming falls within the scope of the technical idea of the present disclosure.

Although explicitly stated otherwise, throughout the specification, the same reference numeral refers to the same constituent element.

Features of the various embodiments of the present disclosure may be integrated or combined severally or as a whole. It would be sufficiently understood by a person of ordinary skill that various conjunctive or driving operations are technically possible. The embodiments may be implemented independent of each other or may be implemented in conjunction with each other.

An inherent effect expected from technical features of the present disclosure, which is not specifically mentioned in the present specification of the present disclosure, is regarded as being incorporated in the present specification. The embodiments are provided to enable a person of ordinary skill in the art to practice the present disclosure without undue experimentation. For this reason, constituent elements of the present disclosure may be illustrated in a different non-proportional manner in the drawings, compared to their actual appearance. A detailed description of a constituent may be omitted when determined to make the nature and gist of the present disclosure unnecessarily obfuscated, or may be shortened.

Throughout the present disclosure, multi-wavelength light may refer to light made up of one beam having a plurality of different wavelengths simultaneously. Alternatively, the multi-wavelength light may refer to light made up of a plurality of different beams on a per-wavelength basis, with a separate beam for every wavelength. Alternatively, the multi-wavelength light may refer to light (wavelength-varying light) that varies over time in one beam. Accordingly, light sources releasing light having a plurality of wavelengths may include multi-wavelength light sources, multi-array light sources, wavelength-varying light sources, and similar wavelengths. These light sources may also release light, having different wavelengths, simultaneously or at different times.

Embodiments of the present disclosure will be described in detail below with reference to the accompanying drawings in a manner that enables a person of ordinary skill in the art to which the present disclosure pertains to practice the present disclosure without undue experimentation. The present disclosure may be practiced in various different forms and is not limited to the embodiments described in the present specification. For definite description of the present disclosure, a constituent element not related to the description thereof is omitted from the drawings. Throughout the specification, the same or similar constituent elements are given the same reference numeral. The size and thickness of each of the constituent elements that are illustrated in the drawings are arbitrarily given for convenient description, and therefore, the present disclosure is not necessarily limited to this size and thickness.

The present disclosure will be described in detail below with the accompanying drawings.

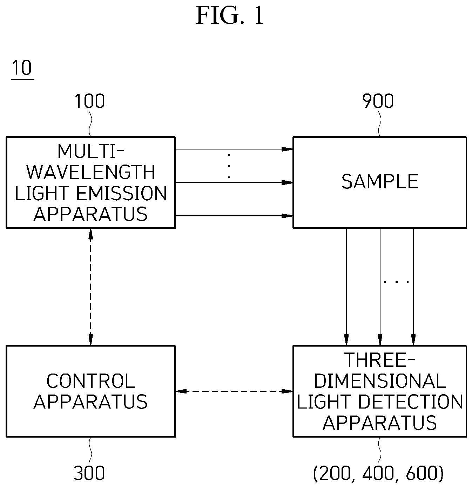

FIG. 1 is a schematic block diagram illustrating a multi-wavelength three-dimensional fluorescent imaging system 10 according to a first embodiment of the present disclosure.

With reference to FIG. 1, the multi-wavelength three-dimensional fluorescent imaging system 10 according to the first embodiment of the present disclosure includes a multi-wavelength light emission apparatus 100, a three-dimensional light detection apparatus 200, and a control apparatus 300. In the multi-wavelength three-dimensional fluorescent imaging system 10, light released from the multi-wavelength light emission apparatus 100 reaches a sample 900. The light emitted to the sample 900 reflects off or radiates from the sample 900 and then reaches the three-dimensional light detection apparatus 200.

The multi-wavelength light emission apparatus 100 refers to an apparatus that releases multi-wavelength infrared light and visible light toward the sample 900. Such multi-wavelength light emission apparatuses 100 may include a light emission apparatus capable of releasing various types of light for scanning the outside or inside of the human body. For example, the multi-wavelength light emission apparatus 100 may be a light source that is used in an endoscope or a laparoscope or may be a light emission apparatus including this light source. Alternatively, the multi-wavelength light emission apparatus 100 may be a light source that is used in various types of medical equipment and may be a light emission apparatus including this light source.

Specifically, the multi-wavelength light emission apparatus 100 may release multi-wavelength infrared light and visible light toward the sample 900 simultaneously or sequentially. A light source of the multi-wavelength light emission apparatus 100 may release a laser beam having various wavelengths and may also release such a laser beam and visible light simultaneously or sequentially. It is preferred that the light released from the light source of the multi-wavelength light emission apparatus 100 be emitted to the sample 900 through a multi-mode fiber. Furthermore, it is preferred that a laser beam, from which noise is eliminated by a noise reducer connected to the multi-mode fiber, be released.

For example, a light source 110, which is the light source of the multi-wavelength light emission apparatus 100, may be a laser utilizing an LED, an LD, or a semiconductor. Alternatively, the light source 110 may be a quantum dot laser or may be a semiconductor optical amplifier light source. In addition, the light source 110 may be configured to release light that varies in wavelength over time. Specifically, the light source of the multi-wavelength light emission apparatus 100 may be one of the following light sources: a wavelength-varying light source, a multi-wavelength light source, or a multi-array light source.

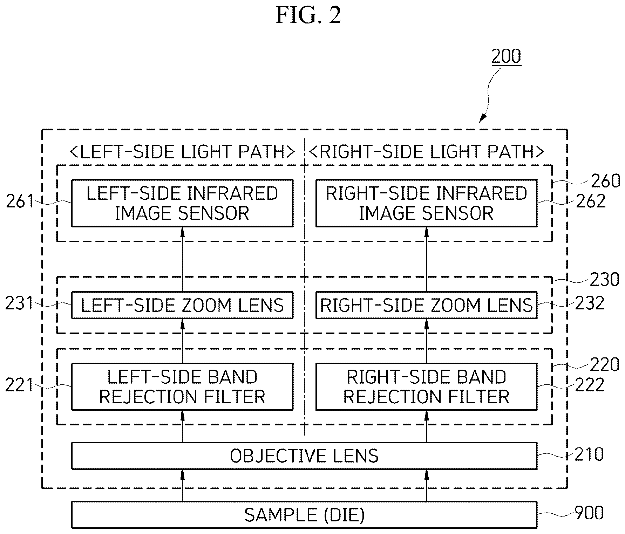

The three-dimensional light detection apparatus 200 is an apparatus capable of detecting a light signal that results from multi-wavelength light, released from the light source of the multi-wavelength light emission apparatus 100, being emitted to the sample 900 and reflecting off or radiating the sample 900. Specifically, the three-dimensional light detection apparatus 200 that detects near-infrared light, mid-infrared light, or infrared light, and visible light, which are released from the multi-wavelength light emission apparatus 100, in such a manner that they can be distinguished and three-dimensionally imaged. The three-dimensional light detection apparatus 200 may further include an image processor processing that performs image processing on the detected various light signals in a distinguished manner. Moreover, the three-dimensional light detection apparatus 200 may further include an output device that outputs an image signal that results from the processing by the image processor, or may be connected to this output device. Specific configurations of three-dimensional light detection apparatuses 200 according to various embodiments of the present disclosure will be described below with reference to FIGS. 2 to 8.

The control apparatus 300 is an apparatus capable of controlling constituent elements of the multi-wavelength three-dimensional fluorescent imaging system 10. The control apparatus 300 establishes a wired or wireless connection to the multi-wavelength light emission apparatus 100 and the three-dimensional light detection apparatus 200 in a manner that enables electric communication. The control apparatus 300 may generate and transmit a signal for controlling these apparatuses. The control apparatus 300 includes a processor and a memory. Examples of the control apparatus 300 may include computers, mobile devices, and various electronic apparatus including an embedded program. In addition, the control apparatus 300 may further include an image processing processor that receives a light signal through the three-dimensional light detection apparatus 200 and processes outputs the received image. Moreover, the control apparatus 300 may enable the image, processed by the image processing processor, to be output through a display device being connected. The control apparatus 300 is not limited to the above-described ones. Examples of the control apparatus 300 include all apparatuses capable of generating and transmitting a signal for controlling the multi-wavelength three-dimensional fluorescent imaging system 10 and of processing data being input.

As described above, the multi-wavelength three-dimensional fluorescent imaging system 10 according to the first embodiment of the multi-wavelength light emission apparatus 100 may detect and output various types of light from the sample 900 in a distinguished manner. At the same time, the multi-wavelength three-dimensional fluorescent imaging system 10 may process the detected light signals in a three-dimensional manner and may output the resulting image in a more elaborate manner. Consequently, the multi-wavelength three-dimensional fluorescent imaging system 10 may assist in making a more precise determination and diagnosis through the three-dimensional image, resulting from distinguishing on a per-wavelength basis.

FIG. 2 is a schematic block diagram illustrating the three-dimensional light detection apparatus according to the first embodiment of the present disclosure.

With reference to FIG. 2, the three-dimensional light detection apparatus 200 includes an objective lens 210, a band rejection filter 220, a zoom lens 230, and an infrared image sensor 260. Although not illustrated in FIG. 2, the three-dimensional light detection apparatus according to the first embodiment of the present disclosure may further include an objective lens corresponding to the infrared image sensor 260.

Specifically, the objective lens 210 is arranged toward the sample 900 and receives a light signal that results from reflecting off or radiating from the sample 900. It is preferred that the objective lens 210 be configured as one wide-angle lens in a manner that corresponds to a die arranged on the sample 900. Accordingly, the objective lens 210 may broadly receive light that results from reflecting off or radiating from the sample 900 in various directions. The objective lens 210 transfers the received light signal to the band rejection filter 220.

Alight signal path includes a left-side light path and a right-side light path. With reference to FIG. 2, a left-side band rejection filter 221, a left-side zoom lens 231, and a left-side infrared image sensor 261 may be arranged on the left-side light path, and a right-side band rejection filter 222, a right-side zoom lens 232, a right-side infrared image sensor 262 may be arranged on the right-side light path. Accordingly, light signal is separated into light signals propagating along the left-side light path and the right-side light path. The light signal on the left-side light path reaches the left-side infrared image sensor 261 through the left-side band rejection filter 221 and the left-side zoom lens 231. The light signal on the left-side light path reaches the right-side infrared image sensor 262 through the right-side band rejection filter 222 and the right-side zoom lens 232.

The band rejection filter 220 includes the left-side band rejection filter 221 and the right-side band rejection filter 222. With reference to FIG. 2, the band rejection filter 220 is arranged on each of the left-side and right-side light paths. The band rejection filter 220 eliminates excited light signal (hereinafter referred to as an "excited light signal") of a light source from a light signal. That is, the band rejection filter 220 is arranged on the left-side and right-side light paths in a physically separated manner. Thus, the left-side band rejection filter 221 eliminates an excited light signal portion of the light source from the light signal transferred to the left, and the right-side band rejection filter 222 eliminates an excited signal portion of the light source from the light signal transferred to the left. The left-side band rejection filter 221 and the right-side band rejection filter 222 transfer the light signals, from which the excited light signals are eliminated, to the left-side zoom lens 231 and the right-side zoom lens 232, respectively.

The zoom lens 230 includes the left-side zoom lens 231 and the right-side zoom lens 232. The zoom lens 230 may be arranged between the band rejection filter 220 and an infrared image sensor 260. With reference to FIG. 2, the left-side zoom lens 231 may be arranged after the left-side band rejection filter 221 on the left-side light path, and the right-side zoom lens 232 may be arranged behind the right-side band rejection filter 222 on the right-side light path. The left-side zoom lens 231 transfers a fluorescent signal, which results from eliminating the excited light signal, to the left-side infrared image sensor 261. The right-side zoom lens 232 transfers a fluorescent signal, which results from eliminating the excited light signal, to the right-side infrared image sensor 262.

The zoom lens 230 may adjust a focal length or may adjust the size of an image. Specifically, the left-side zoom lens 231 may adjust a focal length or the size of an image on the left-side light path, and the right-side zoom lens 232 may adjust a focal length or the size of an image of the sample 900 on the right-side light path.

The infrared image sensor 260 includes the left-side infrared image sensor 261 and the right-side infrared image sensor 262.

In the case, the left-side light path and the right-side light path are generated by separation of a physical path, and a difference in a path for the light signal is present between the left-side light path and the right-side light path. This difference in the path is generated by a time taken for the light signal to reach the infrared image sensor 260 or by a distance over which the light signal propagates to reach the infrared image sensor 260. Specifically, the difference in the path between the left-side light path and the right-side light path is generated by a difference between the time taken for the light signal to reach the left-side infrared image sensor 261 and the time taken for the light signal to reach the right-side infrared image sensor 262. Alternatively, the difference in the path is generated by a difference between the distance over which the light signal propagates to reach the left-side infrared image sensor 261 and the distance over which the light signal propagates to reach the right-side infrared image sensor 262. In the three-dimensional light detection apparatus according to the first embodiment of the present disclosure, which is illustrated in FIG. 2, the left-side light path and the right-side light path are physically separated from each other. Therefore, the difference in the path may be generated by the difference between the distance over which the light signal propagates to reach the left-side infrared image sensor 261 and the distance over which the light signal propagates to reach the right-side infrared image sensor 262.

In the present specification, the infrared image sensor 260 may detect a wavelength-varying fluorescent signal within the infrared region that includes near-infrared light, mid-infrared light, far-infrared light and the like. That is, the infrared image sensor 260 may detect a wavelength-varying fluorescent signal from the light signal that propagates through the band rejection filter 220. Accordingly, the infrared image sensor 260 detects two types of fluorescent signals, resulting from the separation of a path for the light signal, in a distinguished manner. Specifically, the light signal is separated into light signals propagating along the left-side light path and the right-side light path. Thus, the left-side infrared image sensor 261 of the infrared image sensor 260 detects a fluorescent signal on the left-side light path in a distinguished manner, and the right-side infrared image sensor 262 thereof detects a fluorescent signal on the left-side light path in a distinguished manner.

The three-dimensional light detection apparatus 200 according to the first embodiment of the present disclosure detects the fluorescent signal on the left-side light path through the band rejection filter, the zoom lens, and the infrared image sensor, all of which are arranged on the left-side light path. Similarly, the three-dimensional light detection apparatus 200 detects the fluorescent signal on the right-side light path through the band rejection filter, the zoom lens, and the infrared image sensor, all of which are arranged on the right-side light path. Consequently, the three-dimensional light detection apparatus 200 may detect the fluorescent signal in a three-dimensional manner and may output the resulting signal. In addition, the three-dimensional light detection apparatus 200 may detect a fluorescent signal from the multi-wavelength light, released from the multi-wavelength light emission apparatus 100, in a manner that is distinguished on a per-wavelength basis, and may three-dimensionally express a plurality of fluorescent signals in a distinguished manner.

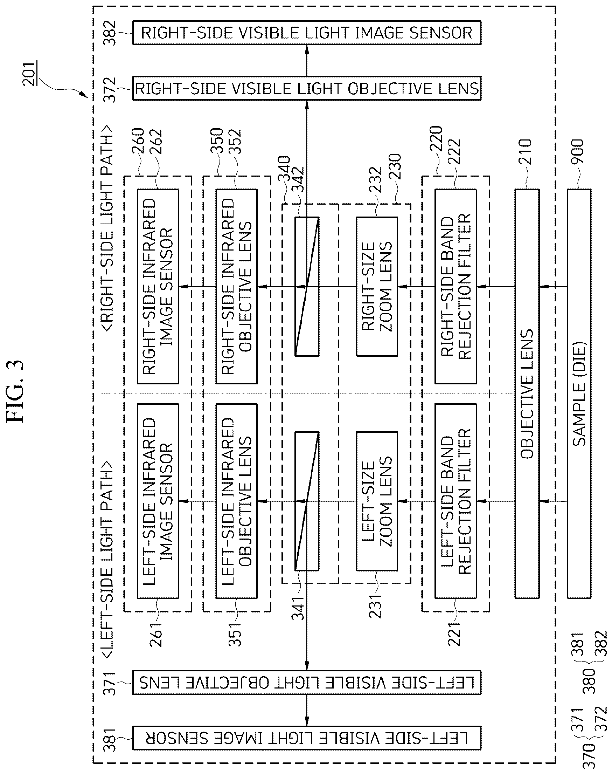

FIG .3 is a schematic block diagram illustrating a three-dimensional light detection apparatus 201 according to a second embodiment of the present disclosure. The three-dimensional light detection apparatus 201 illustrated in FIG. 3 further includes a wavelength separator 340, an infrared objective lens 350, a visible light objective lens 370, and a visible light image sensor 380 in addition to the constituent elements of the three-dimensional light detection apparatus 200, which are illustrated in FIG. 2. The other constituent elements of the three-dimensional light detection apparatus 201 are substantially the same as the ones illustrated in FIG. 2, and descriptions thereof are omitted.

With reference to FIG. 3, the wavelength separator 340 is arranged between the infrared image sensor 260 and the zoom lens 230. The wavelength separator 340 includes a left-side wavelength separator 341 arranged on the left-side light path and a right-side wavelength separator 342 arranged on the right-side light path. In other words, the left-side wavelength separator 341 is arranged between the left-side infrared image sensor 261 and the left-side zoom lens 231, and the right-side wavelength separator 342 is arranged between the right-side infrared image sensor 262 and the right-side zoom lens 232.

The wavelength separator 340 may separate a light signal on the basis of a specific wavelength. Specifically, the wavelength separator 340 may separate a light signal propagating through one or both of the following constituent elements: the band rejection filter 220 or the zoom lens 230, into an infrared fluorescent signal and a visible light signal in the visible light region, on the basis of a wavelength between the wavelengths of infrared light and visible light. The wavelength separator 340 may be, for example, a dichroic mirror, a wavelength separator, or a beam splitter.

With reference to FIG. 3, the left-side wavelength separator 341 may separate a light signal propagating through the left-side band rejection filter 221 and the left-side zoom lens 231 into a fluorescent signal and a visible light signal. Similarly, the right-side wavelength separator 342 may separate a light signal propagating through the right-side band rejection filter 222 and the right-side zoom lens 232 into a fluorescent signal and a visible light signal. The fluorescent signal and the visible light signal, which result from the separation by the wavelength separator 340, are transferred toward the infrared image sensor 260 and the visible light image sensor 380, respectively.

The visible light image sensor 380 detects the visible light signal, separated from the light signal by the wavelength separator 340. The visible light image sensor 380 includes a left-side visible light image sensor 381 and a right-side visible light image sensor 382. With reference to FIG. 3, the left-side visible light image sensor 381 detects the visible light signal, separated by the left-side wavelength separator 341 from the light signal propagating along the left-side light path. Similarly, the right-side visible light image sensor 382 detects the visible light signal, separated by the right-side wavelength separator 342 from the light signal propagating along the right-side light path.

As illustrated in FIG. 3, the three-dimensional light detection apparatus 201 may further include the infrared objective lens 350 between the wavelength separator 340 and the infrared image sensor 260, and the visible light objective lens 370 between the wavelength separator 340 and the visible light image sensor 380. The infrared objective lens 350 may collect the fluorescent signal propagating through the wavelength separator 340 and may transfer the collected fluorescent signal to the infrared image sensor 260. Similarly, the visible light objective lens 370 may collect the visible light signal separated from the wavelength separator 340 and may transfer the collected visible light signal to the visible light image sensor 380.

The infrared objective lens 350 may be arranged on each of the left-side light path and the right-side light path, and the visible light objective lens 370 may be arranged on each of the left-side light path and the right-side light path. That is, the infrared objective lens 350 includes a left-side infrared objective lens 351 arranged on the left-side light path, and a right-side infrared objective lens 352 arranged on the right-side light path. Similarly, the visible light objective lens 370 includes a left-side visible light objective lens 371 on the left-side light path, and a right-side visible light objective lens 372 arranged on the right-side light path.

In the three-dimensional light detection apparatus 201 according to the second embodiment of the present disclosure, the wavelength separator 340 performs separation into the fluorescent signal and the visible light signal. The infrared image sensor 260 and the visible light image sensor 380 detect the fluorescent signal and the visible light signal, respectively, which result from the separation. Accordingly, the three-dimensional light detection apparatus 201 may detect the fluorescent signal and the visible light signal on each of the left-side light path and the right-side light path. Accordingly, the three-dimensional light detection apparatus 201 may also three-dimensionally detect the visible light signal, together with a multi-wavelength fluorescent signal, and may output the resulting signals. Accordingly, the three-dimensional light detection apparatus 201 may detect the fluorescent signal from the multi-wavelength light released from the multi-wavelength light emission apparatus 100 in a manner that is distinguished on a per-wavelength basis, and may also the visible light signal, together with the fluorescent signal. Consequently, the three-dimensional light detection apparatus 201 may three-dimensionally express a plurality of the fluorescent signals and the visible light signal in a distinguished manner. In medical equipment including the three-dimensional light detection apparatus according to the second embodiment of the present disclosure, a plurality of types of target cells (for example, cancer cells) may be checked by being distinguished in different colors using a plurality of contrast mediums, and may be three-dimensionally displayed. Consequently, the plurality of types of target cells can be diagnosed in a more precise manner.

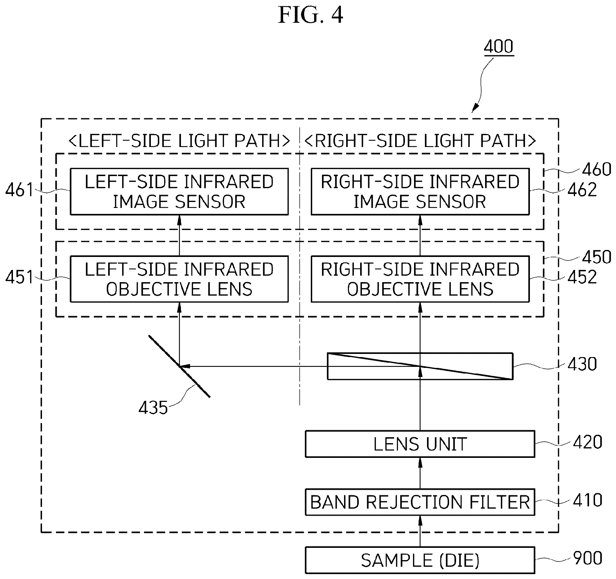

FIG. 4 is a schematic block diagram illustrating a three-dimensional light detection apparatus 400 according to a third embodiment of the present disclosure. A left-side infrared image sensor 461 in FIG. 4 is configured to perform the same function as the left-side infrared image sensor 261 described with reference to FIGS. 2 and 3. Similarly, a right-side infrared image sensor 462 in FIG. 4 is configured to perform the same function as the right-side infrared image sensor 262 described with reference to FIGS. 2 and 3. Therefore, descriptions of the left-side infrared image sensor 461 and the right-side infrared image sensor 462 are omitted.

With reference to FIG. 4, the three-dimensional light detection apparatus 400 includes a band rejection filter 410, a lens unit 420, the path separator 430, a reflector 435, an infrared objective lens 450, and an infrared image sensor 460.

The band rejection filter 410 is arranged between the lens unit 420 and the sample 900. The band rejection filter 410 is adjacent to the sample 900 and receives a light signal that results from reflecting off or radiating from the sample 900. The band rejection filter 410 eliminates an excited light signal from the light signal that results from reflecting off or radiating from the sample 900.

The lens unit 420 is arranged behind the band rejection filter 410 to face toward the sample 900. The lens unit 420 includes one or both of the following lenses: an objective lens or a zoom lens. Accordingly, the objective lens of the lens unit 420 may collect the light signal propagating through the band rejection filter 410, and the zoom lens may adjust a focal length or the size of an image of the sample 900 on the path for the light signal propagating through the band rejection filter 410. According to the third embodiment of the present disclosure, the lens unit 420 may be configured in various ways, including the inclusion of one or both of the following lenses: an objective lens or a zoom lens.

With reference to FIG. 4, the path separator 430 is arranged between the infrared image sensor 460 and the lens unit 420. The path separator 430 may be a beam splitter. the path separator 430 separates the light signal propagating through the band rejection filter 410 into light signals to propagate along two light paths. That, the path separator 430 separates the light signal into a left-side light signal toward the left-side light path and a right-side light signal toward the right-side light path.

The reflector 435 reflects the light signal, resulting from the separation by the path separator 430, toward the infrared image sensor 460, resulting in changing the light path therefor. For example, with reference to FIG. 4, the left-side light signal toward the left-side light path of the two light paths, which results from the separation by the path separator 430, is reflected toward the left-side infrared image sensor 461 by the reflector 435.

With reference to FIG. 4, the three-dimensional light detection apparatus 400 may further include the infrared objective lens 450 between the path separator 430 and the infrared image sensor 460. The infrared objective lens 450 may collect the fluorescent signal propagating through the path separator 430 and may transfer the collected fluorescent signal to the infrared image sensor 460. In addition, the infrared objective lens 450 may be arranged on each of the left-side light path and the right-side light path. That is, the infrared objective lens 450 includes a left-side infrared objective lens 451 arranged on the left-side light path, and a right-side infrared objective lens 452 arranged on the right-side light path.

The infrared image sensor 460 may detect the fluorescent signal from the light signal, which results from the path separation by the path separator 430 to the left side and the right side. Specifically, the left-side infrared image sensor 461 arranged on the left-side light path may detect the fluorescent signal from the left-side light signal, transferred along the left-side light path, which results from the path separation by the path separator 430 to the left. Similarly, the right-side infrared image sensor 462 arranged on the right-side light path may detect the fluorescent signal from the right-side light signal, transferred along the right-side light path, which results from the path separation by the path separator 430 to the right.

In this manner, the fluorescent signal is separated into fluorescent signals propagating along two light paths by the path separator 430 and the reflector 435. These two light paths run in parallel with each other. A difference in distance on the path between the two paths is present. Accordingly, the fluorescent signals reach the left-side infrared image sensor 461 and the right-side infrared image sensor 462, respectively, along the two light paths, the left-side and right-side light paths.

In the three-dimensional light detection apparatus 400 according to the third embodiment of the present disclosure, the light path can be separated to the left side and the right side by path separator 430 and the reflector 435 in such a manner that the fluorescent signal can be three-dimensionally detected using only one band rejection filter and the selectively application lens unit. Accordingly, the three-dimensional light detection apparatus 400 can separate the light path to the left side and the right side by employing only a smaller and simpler configuration, thereby three-dimensionally detecting and outputting the multi-wavelength fluorescent signal.

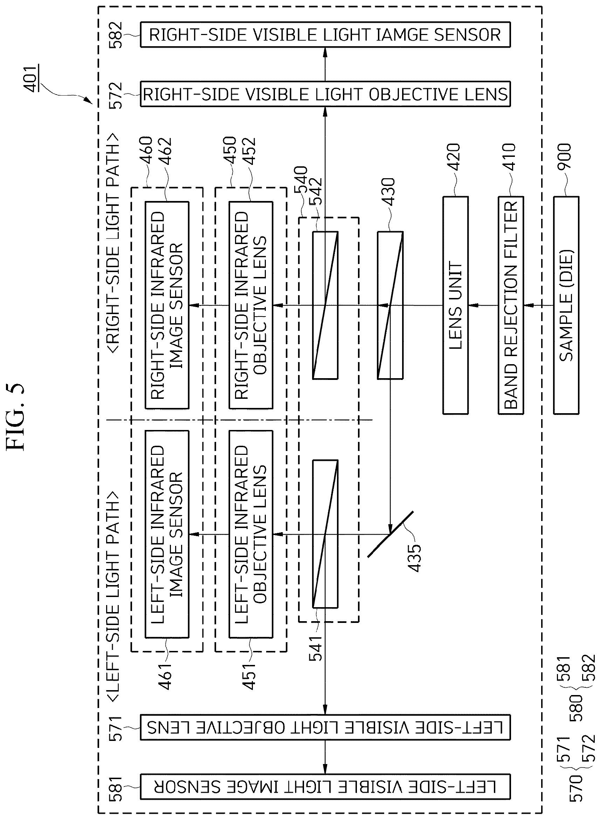

FIG. 5 is a schematic block diagram illustrating a three-dimensional light detection apparatus 401 according to a fourth embodiment of the present disclosure. The three-dimensional light detection apparatus 401 illustrated in FIG. 5 further includes a wavelength separator 540, a visible light objective lens 570, and a visible light image sensor 580 in addition to the constituent elements of the three-dimensional light detection apparatus 400, which are illustrated in FIG. 4. The other constituent elements of the three-dimensional light detection apparatus 401 are substantially the same as the ones illustrated in FIG. 4, and descriptions thereof are omitted.

With reference to FIG. 5, the wavelength separator 540 is arranged between the infrared image sensor 460 and the path separator 430. In addition, the wavelength separator 540 includes a left-side wavelength separator 541 and a right-side wavelength separator 542, which are arranged on the left-side light path and the right-side light path, respectively. Specifically, the left-side wavelength separator 541 arranged on the left-side light path separates the left-side light signal, which results from the separation by the path separator 430 into the left-side light path and results from the path separation by the reflector 435 to the left, into the fluorescent signal and the visible light signal. Similarly, the right-side wavelength separator 542 arranged on the right-side light path separates the right-side light signal, which results from the separation by the path separator 430 into the right-side light path, into the fluorescent signal and the visible light signal. Accordingly, the fluorescent signal, resulting from the separation by the left-side wavelength separator 541, propagates toward the left-side infrared image sensor 461, and the visible light signal, resulting from the separation by the left-side wavelength separator 541, propagates toward a left-side visible light image sensor 581. Likewise, the fluorescent signal, resulting from the separation by the right-side wavelength separator 542, propagates toward the right-side infrared image sensor 462, and the visible light signal, resulting from the separation by the right-side wavelength separator 542, propagates toward a right-side visible light image sensor 582.

The visible light image sensor 580 detects the visible light signal from each of the left-side and right-side light signals, which result from the separation by the wavelength separator 540. The visible light image sensor 580 includes the left-side visible light image sensor 581 and the right-side visible light image sensor 582. With reference to FIG. 5, the left-side visible light image sensor 581 detects the visible signal separated from the left-side light signal propagating along the left-side light path, which results from the left-side wavelength separator 541. Similarly, the right-side visible light image sensor 582 detects the visible signal separated from the right-side light signal propagating along the right-side light path, which results from the right-side wavelength separator 542.

With reference to FIG. 5, the three-dimensional light detection apparatus 401 may further include the visible light objective lens 570 between the wavelength separator 540 and the visible light image sensor 580. The visible light objective lens 570 may collect the visible signal, resulting from the separation, from the wavelength separator 540 and may transfer the collected visible signal to the visible light image sensor 580. Specifically, a left-side visible light objective lens 571 arranged on the left-side light path may transfer the left-side visible light signal, resulting from the separation by the left-side wavelength separator 541, to the left-side visible light image sensor 581. Similarly, a right-side visible light objective lens 572 arranged on the right-side light path may transfer the right-side visible light signal, resulting from the separation by the right-side wavelength separator 542, to the right-side visible light image sensor 582.

In the three-dimensional light detection apparatus 401 according to the fourth embodiment of the present disclosure, the wavelength separator 540 may separate the light signal into the fluorescent signal and the visible light signal. The path separator 430 and the reflector 435 may separate the light signal, resulting from the separation to the left side, into the fluorescent signal and the visible light signal, and may separate the light signal, resulting from the separation to the right side, into the fluorescent signal and the visible light signal. That is, the three-dimensional light detection apparatus 401 may perform separation into the fluorescent signal and the visible light signal on each of the left and right sides. Accordingly, the inclusion of the path separator 430 and the reflector 435 in the three-dimensional light detection apparatus 401 can simplify a configuration of the three-dimensional light detection apparatus 401 by reducing the number of the lenses and the number of the filters. At the same time, the inclusion enables the multi-wavelength fluorescent signal, together with the visible light signal, to be detected in a distinguished manner. Consequently, the three-dimensional light detection apparatus 401 can three-dimensionally express a plurality of the fluorescent signals and the visible light signal in a distinguished manner. In medical equipment including the three-dimensional light detection apparatus according to the fourth embodiment of the present disclosure, a plurality of types of target cells (for example, cancer cells) may be checked by being distinguished in different colors using a plurality of contrast mediums, and may be three-dimensionally displayed. Consequently, the plurality of types of target cells can be diagnosed in a more precise manner.

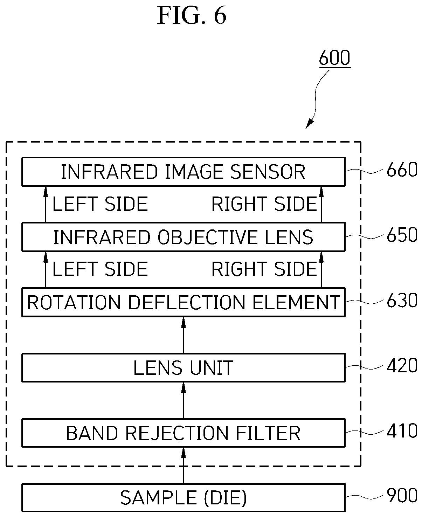

FIG. 6 is a schematic block diagram illustrating a three-dimensional light detection apparatus 600 according to a fifth embodiment of the present disclosure. The three-dimensional light detection apparatus 600 illustrated in FIG. 6 includes a rotation deflection element 630 instead of the path separator 430 and the reflector 435, among the constituent elements of the three-dimensional light detection apparatus 400, which are illustrated in FIG. 4. The band rejection filter 410 and the lens unit 420 of the three-dimensional light detection apparatus 600 are substantially the same as the ones of the three-dimensional light detection apparatus 400, which are illustrated in FIG. 4, and descriptions thereof are omitted.

With reference to FIG. 6, the three-dimensional light detection apparatus 600 includes a rotation deflection element 630 as the path separator. Accordingly, the three-dimensional light detection apparatus 600 includes one infrared objective lens 650 and one infrared image sensor 660.

The rotation deflection element 630, which is the path separator, may change deflection of the light signal propagating through the band rejection filter 410 and the lens unit 420, according to a predetermined time, thereby separating the path for the light signal temporally or spatially. Accordingly, the light signal propagating through the rotation deflection element 630 is changed in such a manner as to have specific deflection at a predetermined time interval and then propagates toward the infrared image sensor 660. The light signal may be separated into light signals propagating along two or more light paths by adjusting the time interval and the deflection. That is, the rotation deflection element 630 may separate the light signal into the left-side light signal and the right-side light signal according to the interval time or the deflection. Particularly, the rotation deflection element 630 in FIG. 6 may separate the light signal propagating through the band rejection filter 410 and the lens unit 420 into a left-side fluorescent signal and a right-side fluorescent signal according to the interval time or the deflection.

The light signals, resulting from the separation by the rotation deflection element 630 into the left-side light path and the right-side light path, can propagate through one infrared objective lens 650 and can reach the infrared image sensor 660. Accordingly, the infrared image sensor 660 may detect the fluorescent signals, resulting from the separation by the rotation deflection element 630 into the left-side light path and the right-side light path according to the time interval and the deflection. That is, the infrared image sensor 660 may detect the left-side fluorescent signal and the right-side fluorescent signal in a distinguished manner according to the time interval and the deflection.

As described above, in the three-dimensional light detection apparatus 600 according to the fifth embodiment of the present disclosure, the rotation deflection element 630 may simply separate the light signal into the light signals propagating along the two paths. Moreover, the left-side light signal and the right-side light signal, which result from the separation of the light signal by the rotation deflection element 630, propagate through one infrared objective lens 650. Then, one infrared image sensor 660 may detect the fluorescent signal on the left-side light path and the fluorescent signal on the right-side light path in a separated manner. Accordingly, the three-dimensional light detection apparatus 600 may be more simply implemented using a small number of the image sensors and a small number of the objective lens. Consequently, the three-dimensional light detection apparatus 600 can have a reduced size and weight.

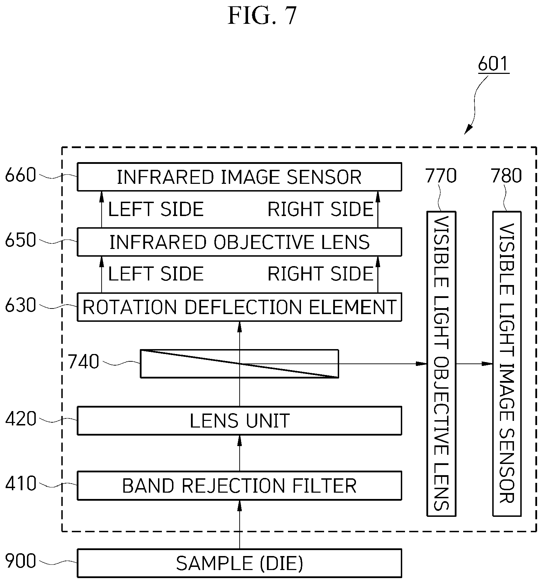

FIG. 7 is a schematic block diagram illustrating a three-dimensional light detection apparatus 601 according to a sixth embodiment of the present disclosure. The three-dimensional light detection apparatus 601 in FIG. 7 further includes a wavelength separator 740, a visible light objective lens 770, and a visible light image sensor 780 in addition to the constituent elements of the three-dimensional light detection apparatus 600 in FIG. 6. The other constituent elements of the three-dimensional light detection apparatus 601 are substantially the same as the ones in FIG. 6, and descriptions thereof are omitted.

With reference to FIG. 7, the wavelength separator 740 is arranged between the infrared image sensor 660 and the band rejection filter 410, Accordingly, the fluorescent signal in the light signal propagating through the band rejection filter 410 and the lens unit 420 propagated through the wavelength separator 740 and is transferred to the infrared image sensor 660. Similarly, the visible light signal is separated, by the wavelength separator 740, from the light signal propagating through the band rejection filter 410 and the lens unit 420, and the resulting visible light signal is transferred to the visible light image sensor 780.

With reference to FIG. 7, the visible light objective lens 770 is arranged between the wavelength separator 740 and the visible light image sensor 780. Accordingly, the visible signal, resulting from the separation by the wavelength separator 740, propagates through the visible light objective lens 770 and reaches the visible light image sensor 780. Therefore, the visible light image sensor 780 detects the visible light signal, resulting from the separation by the wavelength separator 740.

In the three-dimensional light detection apparatus 601 according to the sixth embodiment of the present disclosure, the wavelength separator 740 separates the light signal into the fluorescent signal and the visible light signal. The fluorescent signal propagated through the rotation deflection element 630 and is transferred to the infrared image sensor 660, and the visible light signal is transferred to the visible light image sensor 780. Accordingly, the three-dimensional light detection apparatus 601 may detect and output the fluorescent signal in such a manner that the wavelength thereof is three-dimensionally distinguished. At the same time, the three-dimensional light detection apparatus 601 may detect and output the visible light signal.

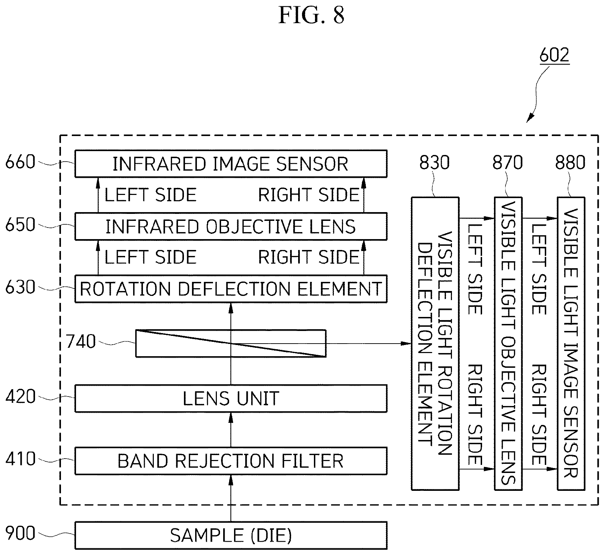

FIG. 8 is a schematic block diagram illustrating a three-dimensional light detection apparatus 602 according to a seventh embodiment of the present disclosure. The three-dimensional light detection apparatus 602 in FIG. 8 further includes a visible light rotation deflection element 830 facing toward a visible light image sensor 880, in addition to the constituent elements of the three-dimensional light detection apparatus 601 in FIG. 7. The other constituent elements of the three-dimensional light detection apparatus 602 are substantially the same as the ones in FIG. 7, and descriptions thereof are omitted.

With reference to FIG. 8, the visible light rotation deflection element 830 is arranged between the wavelength separator 740 and the visible light image sensor 880. The visible light rotation deflection element 830 may separate the path for the visible light signal temporally or spatially by changing deflection of the visible light signal, resulting from the separation by the wavelength separator 740. Accordingly, the visible light signal propagating through the visible light rotation deflection element 830 is changed in such a manner as to have specific deflection at a predetermined time interval and then propagates toward the visible light image sensor 880. The visible light signal may be separated into light signals propagating along two or more light paths by adjusting the time interval and the deflection. That is, the visible light rotation deflection element 830 may separate the visible light signal, resulting from the separation by the wavelength separator 740, into the left-side visible light signal and the right-side visible light signal, according to the time interval and the deflection.

The visible light signals, resulting from the separation by the visible light rotation deflection element 830 into the left-side light path and the right-side light path, may propagate through one visible light objective lens 870 and may reach one visible light image sensor 880. Accordingly, the visible light image sensor 880 may detect the visible lights, resulting from the separation by the visible light rotation deflection element 830 into the left-side light path and the right-side light path, according to the time interval and the deflection.

The three-dimensional light detection apparatus 602 according to the seventh embodiment of the present disclosure may enable the fluorescent signal and the visible light signal, which result from the separation by the wavelength separator 740, to propagate through the rotation deflection element 630 and the visible light rotation deflection element 830, respectively. Thus, the fluorescent signal and the visible light signal may separately propagate along the left-side light path and the right-side light path, respectively. Accordingly, in the three-dimensional light detection apparatus 602, one infrared image sensor 660 may detect and output the three-dimensional fluorescent signal. One visible light image sensor 880 may detect and output the three-dimensional visible light signal. Accordingly, the inclusion of the wavelength separator 740, the rotation deflection element 630, and the visible light rotation deflection element 830 in the three-dimensional light detection apparatus 602 can simplify a configuration of the three-dimensional light detection apparatus 602 by reducing the number of the lenses and the number of the filters. At the same time, the inclusion enables the multi-wavelength fluorescent signal and the visible light signal to be detected and expressed in a distinguished manner. In medical equipment including the three-dimensional light detection apparatus according to the seventh embodiment of the present disclosure, a plurality of types of target cells (for example, cancer cells) may be checked by being distinguished in different colors using a plurality of contrast mediums. Other adjacent cells and organs are also marked with colors in a 3-three-dimensional manner. Consequently, the plurality of types of target cells can be diagnosed in a more precise manner. Moreover, various fluorescent signals having different wavelengths due to various type of contrast mediums can be distinguished at one time, and thus lesions in various cell regions and states of cells can be checked in a single step.

In the present specification, each block may indicate one portion of a module, a segment, or a code that includes one or more executable instructions for performing a specific logical function(s). In addition, it is noted that, in several modification examples, functions mentioned in the blocks may also be performed in the order different from the specified order. For example, in practice, two blocks that are successively illustrated may be performed substantially simultaneously, and the two blocks or steps may be performed in the reverse order according to the corresponding function, depending on the case.

The embodiments of the present disclosure are described in more detail above with reference to the accompanying drawings. However, the present disclosure is not necessarily limited to the embodiments. Various modifications to the embodiments are possibly implemented within the scope that does not depart from the technical idea of the present invention. Therefore, the embodiments of the present disclosure that are disclosed in the present specification are for describing, rather than limiting, the technical idea of the present disclosure and do not impose any limitation on the scope of the technical idea of the present disclosure. Therefore, in every aspect, the embodiments described above should be understood as being exemplary and non-restrictive. Accordingly, the scope of protection of the present disclosure should be defined by the following claims. All technical ideas that fall within the scope equivalent thereto should be interpreted to be included within the scope of the claims of the present disclosure.

## Claims

1. A three-dimensional light detection apparatus capable of detecting a light signal, resulting from multi-wavelength light, released from a light source and emitted to a sample, reflecting off or radiating from the sample, the apparatus comprising:
an objective lens arranged toward the sample;
a band rejection filter eliminating an excited light signal of the light source from the light signal; and
an infrared image sensor detecting a fluorescent signal from the light signal propagating through the band rejection filter,
wherein the infrared image sensor detects two types of fluorescent signals, resulting from separation caused by a difference in a path for the light signal, in a distinguished manner, and the difference in the path is generated by a time taken for the light signal to reach the infrared image sensor or by a distance over which the light signal propagates to reach the infrared image sensor.

2. The three-dimensional light detection apparatus of claim 1, further comprising:
a zoom lens arranged between the band rejection filter and the infrared image sensor,
wherein the path for the light signal comprises:
a left-side light path; and
a right-side light path, and
wherein the zoom lens is arranged on each of the left-side light path and the right-side light path, and the band rejection filter is arranged on each of the left-side light path and right-side light path.

3. The three-dimensional light detection apparatus of claim 2, further comprising:
a wavelength separator arranged between the infrared image sensor and the zoom lens; and
a visible light image sensor detecting a visible light signal separated from the light signal by the wavelength separator.

4. A three-dimensional light detection apparatus capable of detecting a light signal, resulting from multi-wavelength light, released from a light source and emitted to a sample, reflecting off or radiating from the sample, the apparatus comprising:
a lens unit arranged toward the sample;
a band rejection filter arranged between the lens unit and the sample and eliminating an excited light signal of the light source from the light signal;
a path separator separating the light signal propagating through the band rejection filter into light signals propagating along two light paths, respectively; and
an infrared image sensor detecting a fluorescent signal from each of the light signals, which result from the path separation by the path separator,
wherein the fluorescent signals propagate in parallel with each other and reach the infrared image sensor along the two light paths, respectively, a difference in distance on a path being present between the two light paths, and
wherein the lens unit includes at least one of obj ective and zoom lenses.

5. The three-dimensional light detection apparatus of claim 4, further comprising:
a reflector changing a path for the light signal in such a manner that one of the light signals, which result from the separation by the path separator, propagates toward the infrared image sensor,
wherein the path separator is a beam splitter.

6. The three-dimensional light detection apparatus of claim 5, further comprising:
a wavelength separator arranged between the infrared image sensor and the path separator; and
a visible light image sensor detecting each of the visible light signals, which result from the separation by the wavelength separator.

7. The three-dimensional light detection apparatus of claim 4, wherein the path separator is a rotation deflection element, and the infrared image sensor detects the fluorescent signals, which result from the temporal separation by the rotation reflection into a left-side light path and a right-side light path.

8. The three-dimensional light detection apparatus of claim 7, further comprising:
a wavelength separator arranged between the infrared image sensor and the band rejection filter; and
a visible light image sensor detecting a visible light signal, resulting from the wavelength separator.

9. The three-dimensional light detection apparatus of claim 8, further comprising:
a visible light rotation deflection element arranged between the wavelength separator and the visible light image sensor,
wherein the infrared image sensor detects the visible light signals, which result from the temporal separation by the visible light rotation reflection into the left-side light path and the right-side light path.
